# EUROPÄISCHE PATENTSCHRIFT

(11) **EP 3 575 673 B1**
(45) Veröffentlichungstag und Bekanntmachung des Hinweises auf die Patenterteilung: **16.12.2020**
(21) Anmeldenummer: 19172986.2
(22) Anmeldetag: 07.05.2019
(51) Int. Cl.: F21S 9/03, F21L 4/08, F21W 131/103, F21W 131/109, F21Y 103/10, F21Y 115/10, F21V 8/00

(54) **AUSSENLEUCHTE**
EXTERNAL LIGHT
LUMINAIRE EXTÉRIEUR

(30) Priorität: 29.05.2018 DE 102018112784
(43) Veröffentlichungstag der Anmeldung: 04.12.2019
(73) Patentinhaber: Ledlenser GmbH & Co. KG, 42699 Solingen (DE)
(72) Erfinder: Buhl, Erich, 42697 Solingen (DE)
(74) Vertreter: Patentanwälte Vomberg & Schart

(56) Entgegenhaltungen:
- EP-A1- 1 346 672
- WO-A2-97/40535
- DE-A1-102015 015 970
- DE-U1-202012 006 496
- GB-A- 2 532 713
- US-A1- 2009 251 892

## Beschreibung

Die Erfindung betrifft eine Außenleuchte, insbesondere Garten- oder Campingleuchte mit einem Akkumulator, einem Solarpaneel und einer Lichtquelle, die über einen Lichtleiter Licht an ein optisches Leuchtelement abgibt, wobei an der Außenseite eines Trägerkörpers das Solarpaneel befestigt ist, das von der als Lichtleiter und optischem Leuchtelement dienenden transparenten Hüllschicht mit mindestens einer Stirnfläche abgedeckt ist, in die mindestens eine aus dem Akkumulator und dem Solarpaneel gespeiste LED Licht einstrahlt.

Solarlampen der genannten Art besitzen den Vorteil, dass sie unabhängig von einer Netzspannung und kostengünstig betrieben werden können, weil die zur Beleuchtung benötigte Energie allein aus dem Sonnenlicht gewonnen wird. Das verwendete Solarpaneel ist mit einem wiederaufladbaren Akkumulator elektrisch verbunden, so dass die über das Tageslicht gewonnene elektrische Energie gespeichert werden kann. Entweder über einen Schalter oder Sensoren wird der Akkumulator mit einer Lichtquelle, zumeist einer Leuchtdiode (LED) verbunden, deren Energiebedarf zum Betrieb gering ist. Solarlampen können als Gartenleuchten, Wegleuchten oder Straßenleuchten verwendet werden. Zur Optimierung der Energiegewinnung wird in der EP 1 230 513 B1 vorgeschlagen, dass das Solarlampengehäuse aus einem Würfel mit sechs Wandflächen besteht, der auf seiner Spitze stehend an einer Befestigung angeordnet ist und auf wenigstens zwei seiner oberen Flächen Solarmodule besitzt. Durch diese Maßnahme wird erreicht, dass das ebene Solarpaneel nicht stets nach dem Sonnenstand ausgerichtet werden muss, da die nach oben gerichteten Würfelflächen bereits mehrere Einstrahlungsrichtungen abdecken. Die nach unten gerichtete Würfelflächen werden als Licht-Abstrahlflächen verwendet.

Die DE 10 2015 015 970 A1 beschreibt eine Solarleuchte mit einem zylinderförmigen Gehäuse mit mehreren Solarfolien, die auf dem Zylindermantel angeordnet sind, und mit einer Fußplatte, in der sich ein Akkumulator zur Speisung von innen liegenden LED und die Steuerung befinden.

Die GB 2 532 713 A beschreibt eine solarbetriebene Leuchte mit einem Lichtleiterpaneel als Abdeckung einer Reihe von Solarzellen auf einem quaderförmigen Trägerkörper, in dem neben einer Steuerung Akkumulatoren angeordnet sind. An den Stirnflächen des Lichtleiterpaneels sind jeweils mehrere LED angeordnet, die von dem Akkumulator oder den Solarzellen gespeist werden.

In der DE 103 36 543 B4 wird eine Solarstromanlage beschrieben, bei der die Solarzellen auf einer gewölbten Außenfläche eines Aufnahmekörpers aufgebracht sind, der als Halbkugelschale ausgeführt ist. Innerhalb der Halbkugelschale sind die üblichen elektrischen Bauteile auf einer kreisförmigen Scheibe angeordnet. Eine Trägerkonstruktion bildet eine Halbkugel, die nach außen mit verschiedenen Solarzellen bestückt ist, die von einer wetterfesten transparenten Schutzhülle umgeben sind. An die Trägerkonstruktion nach innen schließt sich eine Wärme-Kälte-Dämmschicht an, gefolgt von einer Batterieschicht, die aus formbarem, leichtgewichtigen Lithium-Akkumulatoren gebildet wird. Den Abschluss nach innen bildet eine schützende Schale. Die gesamte Hohlkonstruktion wird von einer steifen Grundplatte mit einer Ausnehmung zur Aufnahme einer Masthülse getragen. Auf dieser Grundplatte sind mehrere LED angeordnet.

Die DE 10 2015 224 592 B4 beschreibt eine Gartenleuchte mit einer von einem Solarpaneel gespeisten Lichtquelle, einem Stab aus einem ersten selbstleuchtenden Kunststoff und ein mit dem Stab verbundenes Leuchtelement aus einem zweiten selbstleuchtenden Kunststoff, wobei die Lichtquelle derart an einer ersten Stirnseite des Stabs angeordnet ist, dass das von der Lichtquelle emittierte Licht in den Stab eingekoppelt wird und diesen durchdringt. Der Stab ist derart mit dem Leuchtelement verbunden, dass das in den Stab eingekoppelte Licht in das Leuchtelement eingeleitet wird, so dass sowohl der Stab als auch das Leuchtelement über ihre Oberfläche das vom selbstleuchtenden Kunststoff emittierte und das von der Lichtquelle eingeleitete Licht zumindest zeitweise zeitparallel abstrahlen. Bei dieser Konstruktion wird ein Stab als Lichtleiter verwendet, der zudem mit fluoreszierenden Additiven bestückt ist. Der Nachteil dieser Anordnung besteht darin, dass das Solarpaneel und das optische Leuchtelement voneinander getrennt sind, so dass sich ein großes Bauvolumen ergibt. Der als Stab dienende Lichtleiter arbeitet auch nicht verlustfrei, so dass die effektive Strahlungsleistung relativ gering ist.

In der DE 203 07 319 U1 wird eine Solarlampe mit einem Gehäuse, einer Solarzelle und einem Akkumulator sowie einem Leuchtmittel beschrieben, dass aus einer Leuchtdiode, einem Lichtleiter und einem Kristall besteht, wobei das von der Leuchtdiode erzeugt Licht mittelbar durch den Lichtleiter zum Kristall geführt wird und durch diesen Kristall ausstrahlbar ist.

Es ist Aufgabe der vorliegenden Erfindung, die eingangs genannte solarbetriebene Außenleuchte im Hinblick auf eine kompakte Bauweise und größtmögliche Effizienz zu optimieren.

Diese Aufgabe wir durch die Außenleuchte nach Anspruch 1 gelöst, die dadurch gekennzeichnet ist, dass an der Außenseite eines Trägerkörpers mit einer konvexen Mantelfläche das Solarpaneel befestigt ist, das von einer als Lichtleiter und optisches Leuchtelement dienenden transparenten Hüllschicht mit mindestens einer Stirnfläche abgedeckt ist, in die mindestens eine aus dem Akkumulator oder dem Solarpaneel gespeiste LED Licht einstrahlt. Vorzugsweise ist zwischen dem Trägermantel und dem Solarpaneel der als Folie ausgebildete Akkumulator, insbesondere Li-Akkumulator angeordnet.

Eine weiterhin optimierte Bauform ergibt sich, indem der Trägerkörper rohrförmig ausgebildet ist und einen Längsschlitz aufweist, in dem mindestens eine LED oder mehrere LED auf einem Streifen angeordnet sind.

Verwendet man als Trägerkörper ein längs geschlitztes Zylinderrohr, können jeweils an den Stirnflächen dieses Schlitzes LED-Streifen angeordnet werden, die zu beiden Seiten Licht in die als Lichtleiter und optisches Leuchtelement ausgestaltete transparente Schicht einstrahlen. Sollte Zylinderrohre haben im Gegensatz zu ebenen oder halbkugelförmig gewölbten Solarpaneelen den Vorteil, dass das Sonnenlicht aus beliebigen Richtungen zur Stromerzeugung verwertet wird. Unter einem Lichtleiter wird ein Glaskörper verstanden, der nach dem Gesetz der Totalreflexion das Licht an das Austrittsende transportiert. Auf diese Weise wird das über die LED eingestrahlte Licht ringsum des Zylinders transportiert und so gelenkt, dass nach allen Seiten eine gleichmäßige Lichtabstrahlung erfolgt. Ein solcher lichttransparenter Körper, der z.B. aus Glas oder Kunststoff bestehen kann, dient gleichzeitig als Schutzhülle für das Solarpaneel und den folienhaften Akkumulator. Erfindungsgemäß wird der gesamte Außenzylindermantel als Stützfläche für die sich ringsum vollflächig erstreckenden Teile wie Solarpaneel, Akkumulator und Lichtleiter/Leuchtelement ausgenutzt.

Durch diese Anordnung wird sowohl eine kompakte Bauweise als auch ein Strahlungsverlust wirkungsvoll vermieden, da die Wege, welche das Licht zurücklegen muss, geringstmöglich sind. Eine solche Außenleuchte lässt sich auch auf eine Schnur oder ein Seil auffädeln, so dass insbesondere mehrere solcher Außenleuchten als temporäre Wegleuchten oder Festbeleuchtung leicht installiert werden können. Solche Außenleuchten, auch als Lichterketten sind wartungsarm, robust und relativ stoßfest.

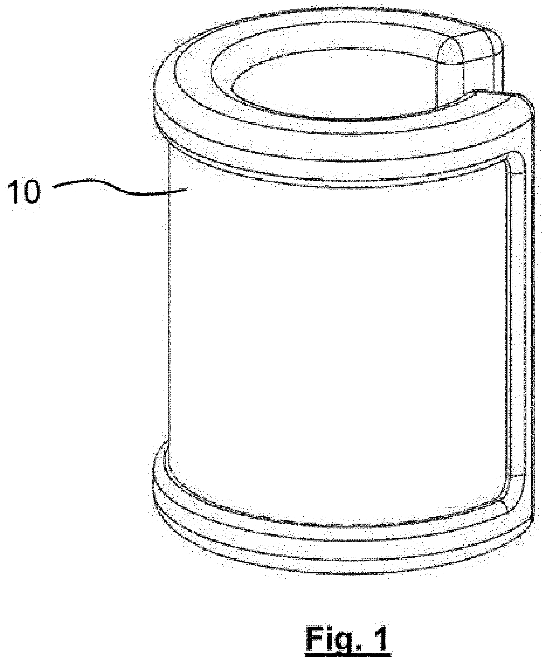

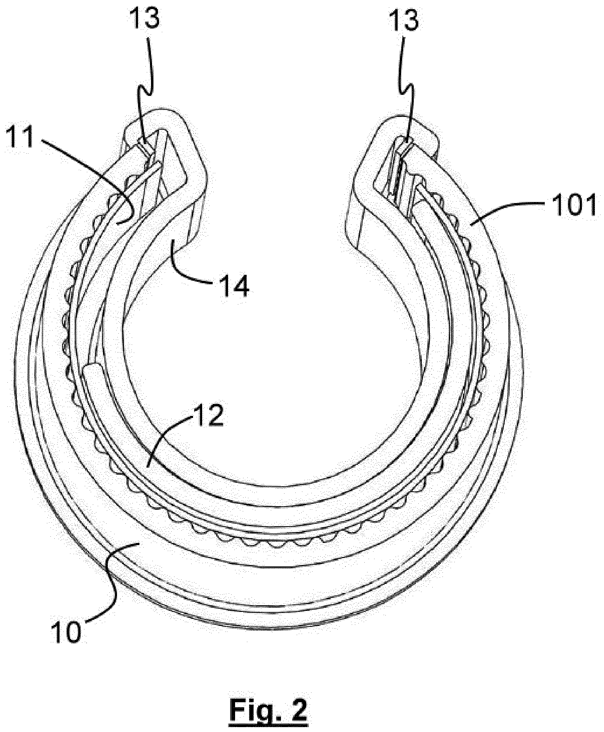

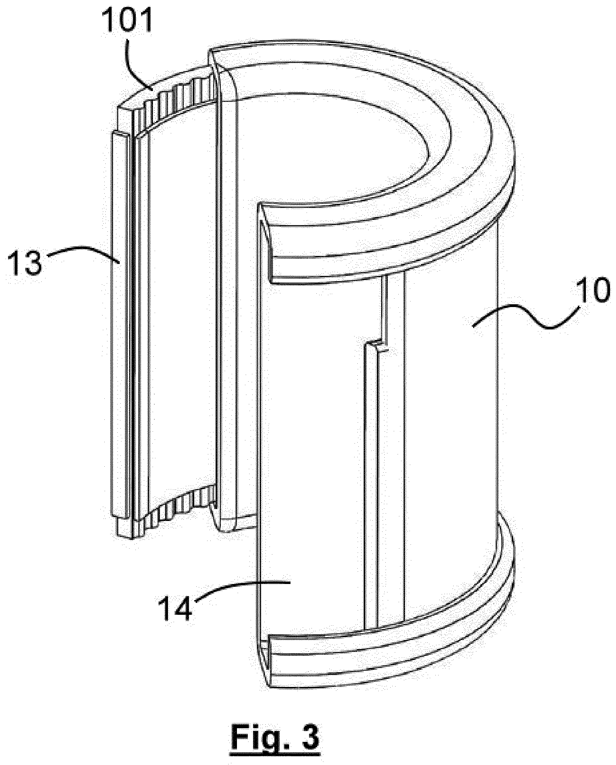

Die erfindungsgemäße Außenleuchte wird im Folgenden anhand der Fig. 1 bis 3 näher erläutert. Es zeigen:
- Fig. 1: eine perspektivische Ansicht einer Außenleuchte,
- Fig. 2: eine perspektivische Querschnittsansicht der Leuchte nach Fig. 1 und
- Fig. 3: eine teilgeschnittene perspektivische Ansicht der Leuchte nach Fig. 1.

Die Außenleuchte besteht im Wesentlichen aus einem Träger 14, der die Innenseite eines einen Längsschlitz aufweisenden Rohrstückes bildet. Am offenen Ende des Längsschlitzes ist der Träger 14 im Querschnitt U-förmig ausgebildet und umfasst bzw. übergreift die Außenwandung, die durch einen Lichtleiter 10 gebildet wird, die für von außen auftreffende Bestrahlung lichtdurchlässig ist. Zwischen diesem Lichtleiter 10 mit einer Stirnfläche 101 an deren oberem Ende und dem Träger 14 sind ein Solarpaneel 11 sowie ein Akkumulator 12 angeordnet. Der Akkumulator, der von dem Solarpaneel 11 gespeist wird, versorgt Leuchtdioden auf einer LED-Leiste 13, die als Streifen an einer Längs-Stirnseite des Lichtleiters 10 angeordnet ist. Von dieser LED-Leiste 13 eingestrahltes Licht wird aufgrund des konstruktiven Aufbaus im Lichtleiter so abgelenkt, dass es von geringen Verlusten abgesehen an der Stirnfläche 101 des Lichtleiters austritt, so dass die Außenleuchte als Leuchtmittel benutzt werden kann. Die Außenleuchte kann als Teil einer Wegbeleuchtung, in aufgereihter Form als lokal beliebig aufhängbare Platzbeleuchtung oder auch als Positions- oder Orientierungsleuchte verwendet werden.

## Patentansprüche

1. Außenleuchte, insbesondere Garten- oder Campingleuchte, mit einem Akkumulator (12), einem Solarpaneel (11) und einer Lichtquelle, die über einen Lichtleiter (10) Licht an ein optisches Leuchtelement abgibt, wobei das Solarpaneel (11) an der Außenseite eines Trägerkörpers (14) befestigt ist, das von der als Lichtleiter (10) und optischem Leuchtelement dienenden transparenten Hüllschicht mit mindestens einer Stirnfläche (101) abgedeckt ist, in die mindestens eine aus dem Akkumulator (12) und dem Solarpaneel (11) gespeiste LED Licht einstrahlt,
**dadurch gekennzeichnet, dass**
der Trägerkörper (14) eine konvexe Mantelfläche besitzt.

2. Außenleuchte nach Anspruch 1, **dadurch gekennzeichnet, dass** zwischen dem Solarpaneel (11) und dem Trägermantel (14) der als Folie ausgebildete Akkumulator (12), insbesondere LI-Akkumulator angeordnet ist.

3. Außenleuchte nach Anspruch 1 oder 2, **dadurch gekennzeichnet, dass** der Trägerkörper (14) rohrförmig ausgebildet ist und einen Längsschlitz aufweist, in dem die mindestens eine LED angeordnet ist.

4. Außenleuchte nach Anspruch 3, **dadurch gekennzeichnet, dass** mehrere LED auf einem Streifen (13) angebracht sind, der in dem Längsschlitz angeordnet ist.

5. Außenleuchte nach einem der Ansprüche 1 bis 4, **dadurch gekennzeichnet, dass** der Trägerkörper (14) ein geschlitztes Zylinderrohr ist, über dessen Außenmantel sich das Solarpaneel (11), der Akkumulator (12) und der Lichtleiter (10) und das Leuchtelement vollflächig erstrecken.

## Claims

1. Outdoor light, in particular garden or camping light, with an accumulator (12), a solar panel (11) and a light source which emits light to an optical light element via a light guide (10), wherein the solar panel (11) is fastened to the outside of a carrier body (14) which is covered by a transparent envelope layer serving as a light guide (10) and optical element, with at least one front face (101) into which light enters, emitted by a LED fed by the accumulator (12) and the solar panel (11),
**characterized in that**
the carrier body (14) has a convex shell surface.

2. Outdoor light according to claim 1, **characterized in** hat between the solar panel (11) and the carrier shell (14) the accumulator (12) in particular LI-accumulator, designed as a film is arranged.

3. Outdoor light according to claim 1 or 2, **characterized in that** the carrier body (14) is tubular and has a longitudinal slot, in which at least one LED is arranged.

4. Outdoor light according to claim 3, **characterized in that** several LED are mounted on a strip (13) arranged in the longitudinal slot.

5. Outdoor light according to claims 1 to 4, **characterized in that** the carrier body (14) is a slotted cylinder tube over the outer shell of which the solar panel (14), the accumulator (12) and the light guide (10) and the light element extend over the entire surface.

## Revendications

1. Lampe d'extérieur, en particulier lampe de jardin ou de camping, comprenant un accumulateur (12), un panneau solaire (11) et une source de lumière qui émet de la lumière vers un élément lumineux optique via un guide de lumière (10), dans laquelle ledit panneau solaire (11) est fixé sur la face extérieure d'un corps de support (14) et est recouvert par la couche d'enveloppe transparente ayant au moins une face frontale (101) et servant de guide de lumière (10) et d'élément lumineux optique, dans laquelle au moins une DEL alimentée à partir de l'accumulateur (12) et du panneau solaire (11) émet de la lumière,
**caractérisée par le fait que** le corps de support (14) présente une surface latérale convexe.

2. Lampe d'extérieur selon la revendication 1, **caractérisée par le fait que** l'accumulateur (12), en particulier l'accumulateur de LI, conçu en tant que film, est agencé entre le panneau solaire (11) et l'enveloppe de support (14).

3. Lampe d'extérieur selon la revendication 1 ou 2, **caractérisée par le fait que** le corps de support (14) est conçu de façon tubulaire et présente une fente longitudinale dans laquelle est agencée ladite au moins une DEL.

4. Lampe d'extérieur selon la revendication 3, **caractérisée par le fait que** plusieurs DELs sont montées sur une bande (13) qui est disposée dans la fente longitudinale.

5. Lampe d'extérieur selon l'une quelconque des revendications 1 à 4, **caractérisée par le fait que** le corps de support (14) est un tube cylindrique fendu sur toute la surface latérale extérieure duquel s'étendent le panneau solaire (11), l'accumulateur (12) et le guide de lumière (10) ainsi que l'élément lumineux.
